# EUROPÄISCHE PATENTSCHRIFT

(11) **EP 0 742 422 B1**
(45) Veröffentlichungstag und Bekanntmachung des Hinweises auf die Patenterteilung: **04.08.1999**
(21) Anmeldenummer: 96103622.5
(22) Anmeldetag: 08.03.1996
(51) Int. Cl.: G01B 5/012, G01B 7/012

(54) **Mehrkoordinaten-Tastkopf**
Multicoordinate feeler head
Tête de palpage de coordonnées multiples

(30) Priorität: 11.05.1995 DE 19517215
(43) Veröffentlichungstag der Anmeldung: 13.11.1996
(73) Patentinhaber: Dr. Johannes Heidenhain GmbH, D-83292 Traunreut (DE)
(72) Erfinder: Brandl, Sebastian Dipl.-Ing., D-83352 Altenmarkt (DE)

(56) Entgegenhaltungen:
- EP-A- 0 529 494
- WO-A-91/14149
- DE-A- 2 347 633
- DE-A- 4 217 641
- DE-A- 4 228 018
- DE-U- 8 602 761

## Beschreibung

Die Erfindung betrifft einen Mehrkoordinaten-Tastkopf gemäß dem Oberbegriff des Anspruches 1.

Es ist eine Vielzahl von Mehrkoordinaten-Tastköpfen bekannt, bei denen bei einer Antastung eines Prüfobjektes ein Taststift ausgelenkt wird und ein Antastsignal generiert wird. Zur Generierung des Antastsignales können elektrische Schalter oder Meßsysteme dienen.

Aus der DE-35 08 396-C1 ist ein Mehrkoordinaten-Tastkopf bekannt, bei dem der Taststift über eine Mehrpunkt-Lagerung im Tastkopfgehäuse in mehrere Koordinatenrichtungen auslenkbar gelagert ist. Der Taststift ist an einem tellerförmigen Halter befestigt, der mittels einer Schraubenfeder in die Lagerung gedrückt wird. Um die Steifigkeit gegen seitliches Ausknikken der Schraubenfeder zu erhöhen, ist sie kegelförmig ausgebildet.

Es hat sich gezeigt, daß zylindrische wie kegelförmige Schraubenfedern einen Einfluß auf die Genauigkeit des Tastkopfes haben. Beim Antastvorgang wird die Schraubenfeder zusammengedrückt, was zu einer Drehbewegung der Schraubenfeder führt, die über die Auflageflächen auf den Taststift übertragen wird. Weiterhin stützen sich die Federenden über den Umfang nicht gleichmäßig ab, was zu unterschiedlichen Antastcharakteristiken führt. Ein weiterer Nachteil des bekannten Tastkopfes ist, daß die Schraubenfeder bei großen Auslenkbewegungen des Taststiftes zum seitlichen Ausknicken neigt und somit zusätzlich undefinierte Querkräfte ausgeübt werden.

Aus der DE-33 17 299-A1 ist ein weiterer Mehrkoordinaten-Tastkopf bekannt, bei dem der Halter des Taststiftes über eine Schraubenfeder in seine Ruhelage gedrückt wird. Beide Federenden sind jeweils in einem Federsitz aufgenommen. Ein Federsitz stützt sich zentral am Tastkopfgehäuse ab und der andere Federsitz am Halter des Taststiftes.

Auch bei diesem Tastkopf beeinflussen undefinierte Querkräfte die Antastcharakteristik nachteilig.

In der DE 42 28 018 A1 ist ein Mehrkoordinaten-Tastkopf beschrieben, bei dem ein Taststift über eine Schraubenfeder in seine Lagerung gedrängt wird. Die Schraubenfeder ist über einen Schaft zwangsgeführt, wobei der Schaft im Tastkopfgehäuse linear zwangsgeführt ist.

Bei dem Mehrkoordinaten-Tastkopf gemäß der DE 86 02 761 U1 - von dem unsere Erfindung ausgeht - ist ebenfalls eine Schraubenfeder mittels einer Linearführung zwangsgeführt. Diese Zwangsführung erfolgt über einen starr an den Taststift bzw. Taststifthalter befestigten Schaft. Die Federachse verläuft immer parallel zur Taststiftachse.

Der Erfindung liegt die Aufgabe zugrunde, einen Mehrkoordinaten-Tastkopf anzugeben, der gute Antastcharakteristiken aufweist und einen einfachen Aufbau besitzt.

Diese Aufgabe wird gemäß der Erfindung durch einen Mehrkoordinaten-Tastkopf mit den Merkmalen des Anspruches 1 gelöst.

Der besondere Vorteil eines derartigen Mehrkoordinaten-Tastkopfes besteht darin, daß sich die Druckfeder nicht negativ auf die Antastcharakteristik auswirkt.

Vorteilhafte Ausgestaltungen der Erfindung sind in den Unteransprüchen angegeben.

Anhand der Zeichnungen wird die Erfindung näher erläutert.

Es zeigt
- Figur 1: ein erstes Ausführungsbeispiel eines erfindungsgemäßen Mehrkoordinaten-Tastkopfes im Längsschnitt,
- Figur 2: einen weiteren Mehrkoordinaten-Tastkopf und
- Figur 3: ein drittes Ausführungsbeispiel im Schnitt.

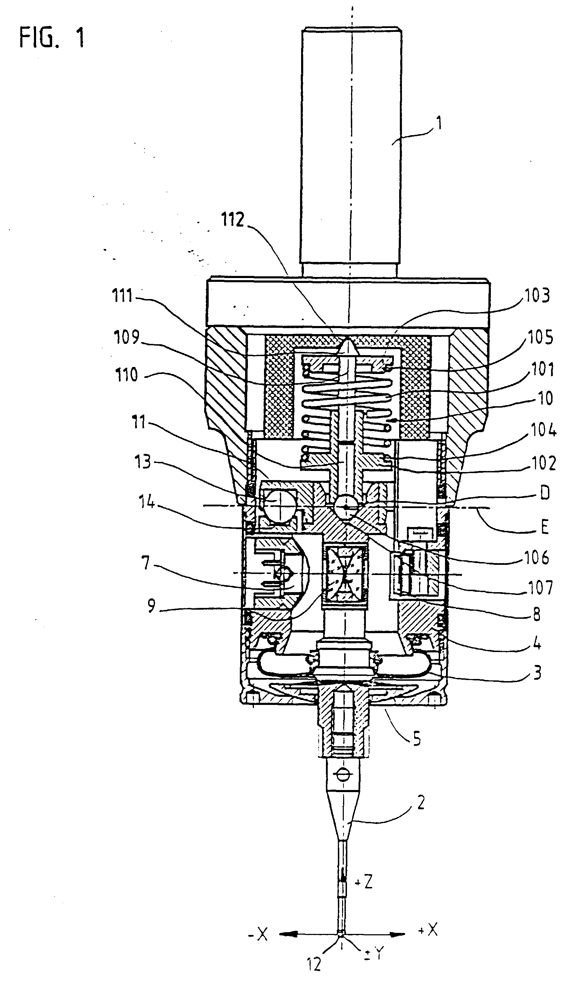

In Figur 1 ist der prinzipielle Aufbau eines erfindungsgemäßen Mehrkoordinaten-Tastkopfes dargestellt. Durch einen Schaft 1 kann der Tastkopf in eine Spindel einer nicht dargestellten Meß- oder Bearbeitungsmaschine eingesetzt werden. Die Auslenkung eines Taststiftes 2 ist in den Koordinatenrichtungen +X, -X, +Y, -Y und +Z möglich. Eine elastische Dichtung 3 schließt den Zwischenraum zwischen einem Tastkopfgehäuse 4 und dem Taststift 2. Eine weitere Dichtung in Form einer Kalottendichtung 5 schützt die elastische Dichtung 3.

Eine Detektoranordnung 7, 8, 9 zur Erfassung der Auslenkung des Taststiftes 2 gibt bei einem bestimmten Auslenkungsbetrag einen Antastimpuls ab, welcher zur Steuerung einer Werkzeugmaschine, zur Bestimmung des Zeitpunktes der Meßwertübernahme einer Koordinaten-Meßmaschine herangezogen wird oder zu einem anderen Meßzweck dient. Die Detektoranordnung 7, 8, 9 besteht aus einem im Tastkopfgehäuse 4 feststehenden optischen Sender 7 und einem dazu ausgerichteten ebenfalls feststehenden Differentialphotoelement 8. In der optischen Achse der beiden Elemente 7, 8 ist ein Linsensystem 9 fest am beweglichen Taststift 2 angebracht. Die Detektoranordnung bildet einen elektrischen Schalter, weshalb der dargestellte Tastkopf auch als schaltender Tastkopf bezeichnet wird.

Ein Teller 11 ist mit dem Taststift 2 fest verbunden, welcher am Ende eine Antastkugel 12 besitzt. Eine Fläche des Tellers 11 steht mit dem Tastkopfgehäuse 4 mittels einer Druckvorrichtung 10 in Verbindung. Die Gegenfläche ist ein Teil der Lagerung des Tellers 11 in dem Tastkopfgehäuse 4.

Während eines Antastvorganges an ein nicht dargestelltes Werkstück wird der Teller 11 durch die Druckvorrichtung 10 an Ort und Stelle - das heißt in seiner Ruhelage - gehalten, wobei die Kraft der Druckvorrichtung 10 der Wirkung des Kontaktdrucks der Antastkugel 12 auf das Werkstück entgegenwirkt, und verhindert, daß der Teller 11 in der Lagerung verschwenkt bzw. abgehoben wird, wenn diese Kraft unter einem bestimmten Wert liegt. Solange der Teller 11 gegen das Tastkopfgehäuse 4 durch die Druckvorrichtung 10 gehalten wird, bilden Teller 11 und Tastkopfgehäuse 4 eine Einheit. Nach Beendigung einer Antastung wirkt die Druckvorrichtung 10 so belastend, daß sie den Teller 11 in die Lagerung zurückführt.

Die Lagerung, ausgeführt als Mehrpunktlager - hier als Dreipunktlager -, besteht aus gleichmäßig über den Umfang des Tellers 11 verteilter und in einer Ebene E angeordneter Kugeln 13, welche fest im Teller 11 verankert sind. Jeder der drei Kugeln 13 ist ein geeignetes Gegenlager 14 zugeordnet. Im dargestellten Beispiel besteht ein Gegenlager 14 aus einer pfannenförmigen kreisrunden Vertiefung. Anstelle einer kreisrunden Vertiefung kann auch eine V-förmige Nut vorgesehen sein. Weiterhin kann jede Lagerstelle auch aus zwei Kugeln bestehen, in denen ein radial nach außen weisender Stift gelagert ist, wie es beispielsweise in der DE-23 47 633-C beschrieben ist.

Die Druckvorrichtung 10 besteht aus einer Schraubenfeder 101, die einen tellerförmigen Federsitz 102, 103 an jedem Ende aufweist. Jeder Federsitz 102, 103 ist derart ausgestaltet, daß eine radiale Verlagerung des Federendes relativ zum Federsitz 102, 104 verhindert wird. Hierzu weist jeder Federsitz 102, 103 einen Vorsprung 104, 105 auf, an dessen Außenumfang das Federende radial anliegt. Der untere Federsitz 102 ist mit Hilfe einer Kugel 106 in einer Bohrung 107 des Tellers 11 zentrisch kippbar und drehbar gelagert. Um eine zentrale, querkraftfreie und verdrehungsfreie Krafteinleitung zu erreichen, ist eine Längsführung vorgesehen, welche die beiden Federsitze 102 und 103 parallel und zentrisch zueinander führt. Diese Führung besteht aus einer Stange 109, die in einer zentrischen Längsbohrung 110 des unteren Federsitzes 102 paßgenau längsgeführt ist und die eine Spitze 111 aufweist, die mittels des oberen Federsitzes 103 in eine Bohrung 112 des Tastkopfgehäuses 4 gedrückt wird. Die Bohrung 110 bildet mit der Stange 109 eine teleskopartige Führung, die gewährleistet, daß die beiden Federsitze 102, 103 und somit die beiden Enden der Schraubenfeder 101 immer parallel zueinander liegen und die Federachse immer senkrecht zu den parallelen Federsitzen 102, 103 ausgerichtet ist. Die Spitze 111 ist hierzu in der Bohrung 112 ebenfalls kippbar und drehbar gelagert. Durch diese Maßnahmen wird eine zentrale, querkraftfreie und verdrehungsfreie Krafteinleitung auf den Taststift 2 erreicht und deshalb eine Verbesserung der Meßgenauigkeit und Reproduzierbarkeit erzielt. Da alle Teile der Druckvorrichtung - außer der Schraubenfeder 101 - Drehteile sind, ist eine kostengünstige und einfache Herstellung sowie Montage gewährleistet.

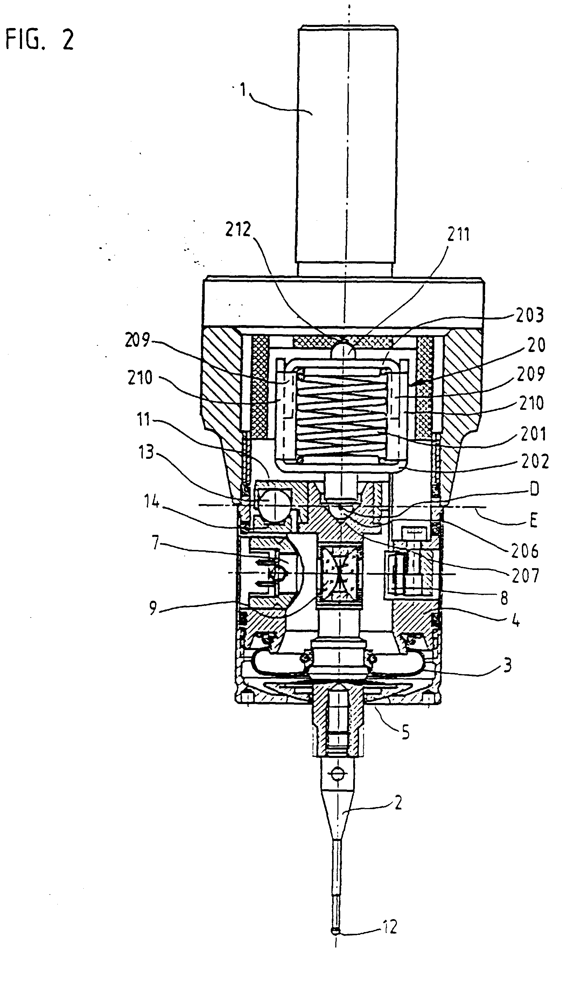

In Figur 2 ist ein weiterer Mehrkoordinaten-Tastkopf gemäß der Erfindung dargestellt. Gleiche Bauteile werden in allen Figuren mit den gleichen Bezugszeichen bezeichnet. Die Druckvorrichtung 20 besteht in diesem Beispiel aus einer Schraubenfeder 201, dessen Enden über zwei topfförmige Federsitze 202, 203 parallel zueinander und längs der Federachse geführt werden. An den beiden Federsitzen 202, 203 sind zentrisch Kugeln 211, 206 angebracht, die über die Schraubenfeder 201 in die korrespondierenden Bohrungen 207, 212 gedrückt werden. Die zentrische Längsführung der beiden Federsitze 202, 203 wird durch seitliche Führungsflächen der Federsitze 202, 203 selbst gebildet, indem die seitlichen Außenflächen 209 des oberen topfförmigen Federsitzes 203 paßgenau mit seitlichen Innenflächen 210 des unteren topfförmigen Federsitzes 202 zusammenwirken. Bei allen Auslenkungen des Taststiftes 2 sind auch hier die Enden der Schraubenfeder 201 immer parallel zueinander ausgerichtet und die Federachse senkrecht zu diesen Enden.

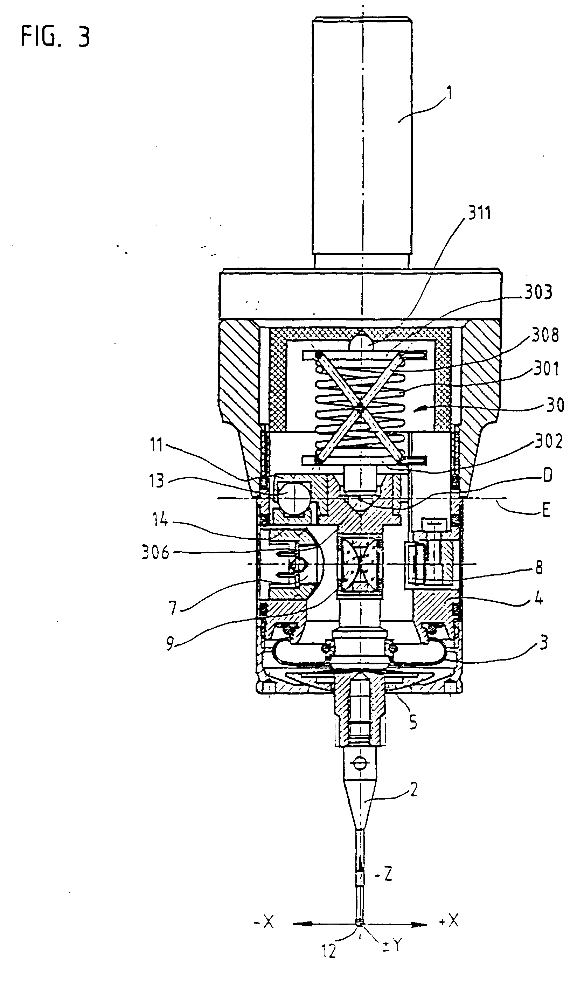

In Figur 3 ist ein weiteres Ausführungsbeispiel eines Mehrkoordinaten-Tastkopfes dargestellt. Die Druckvorrichtung 30 besteht wiederum aus einer Schraubenfeder 301, zwei Federsitzen 302, 303 sowie den daran befestigten Kugeln 311, 306. Die Federsitze 302, 303 werden über ein Scherengetriebe 308 parallel längsgeführt.

Aus den Figuren ist ersichtlich, daß es besonders vorteilhaft ist, wenn die Druckvorrichtung 10, 20, 30 in der Ebene E im Teller 11 gelagert ist, die durch die Mittelpunkte der Kugeln 13 aufgespannt wird. Die Drehachse D sollte somit in der Ebene E liegen.

Die Erfindung kann bei schaltenden und messenden Mehrkoordinaten-Tastköpfen angewandt werden.

## Patentansprüche

1. Mehrkoordinaten-Tastkopf mit einem aus einer Lagerung auslenkbaren Taststift, in die er mittels einer Druckvorrichtung gedrängt wird, wobei
- die Druckvorrichtung (10, 20, 30) eine Schraubenfeder (101, 201, 301) ist, deren beide Enden radial und axial über jeweils einen Federsitz (102, 103; 202, 203; 302, 303) zwangsgeführt sind,
- die beiden Federsitze (102, 103; 202, 203; 302, 303) mittels einer Linearführung (109, 110; 209, 210; 308) parallel zueinander längs der Federachse geführt werden,
- sich ein Federsitz (103, 203, 303) kippbar am Tastkopfgehäuse (4) abstützt, dadurch gekennzeichnet, daß
- sich der weitere Federsitz (102, 202, 302) kippbar am Taststift (2) oder Taststifthalter (11) abstützt.

2. Mehrkoordinaten-Tastkopf nach Anspruch 1, dadurch gekennzeichnet, daß jeder Federsitz (102, 103) eine Passung (104, 105) für ein Ende der Schraubenfeder (101) aufweist.

3. Mehrkoordinaten-Tastkopf nach Anspruch 1 oder 2, dadurch gekennzeichnet, daß die Linearführung aus zumindest einer Stange (109) und zumindest einer Bohrung (110) besteht, in der die Stange (109) radial spielfrei parallel zur Federachse geführt wird.

4. Mehrkoordinaten-Tastkopf nach Anspruch 3, dadurch gekennzeichnet, daß die zumindest eine Bohrung (110) in einem der Federsitze (102) eingebracht ist und die zumindest eine Stange (109) am anderen Federsitz (103) angebracht ist, oder mit dem Federsitz (103) radial spielfrei zusammenwirkt und sich axial daran abstützt.

5. Mehrkoordinaten-Tastkopf nach Anspruch 4, dadurch gekennzeichnet, daß in einem Federsitz (102) eine zentrisch zur Federachse verlaufende Bohrung (110) und am anderen Federsitz (103) eine zentrisch zur Federachse verlaufende Stange (109) vorgesehen ist.

6. Mehrkoordinaten-Tastkopf nach Anspruch 1 oder 2, dadurch gekennzeichnet, daß die Federsitze (202, 203) parallel zur Federachse verlaufende Führungsflächen (209, 210) aufweisen, an denen beide Federsitze (202, 203) zueinander längsgeführt werden.

7. Mehrkoordinaten-Tastkopf nach Anspruch 1 oder 2, dadurch gekennzeichnet, daß die beiden Federsitze (302, 303) über ein Scherengetriebe (308) miteinander verbunden sind und parallel zueinander längsgeführt werden.

8. Mehrkoordinaten-Tastkopf nach einem der vorhergehenden Ansprüche, dadurch gekennzeichnet, daß die Lagerung (13, 14) des Taststiftes (2) eine Mehrstellenlagerung ist, wobei jede Lagerstelle eine Schwenkachse für den Taststift (2) aufweist und die Schwenkachsen der Lagerstellen (13, 14) in einer Ebene (E) liegen und der Drehpunkt (D) zur kippbaren Lagerung des Federsitzes (102, 202, 203) am Taststift (2) oder Taststifthalter (11) im nicht ausgelenkten Zustand im Zentrum dieser Ebene (E) liegt.

## Claims

1. Multicoordinate feeler head with a tracer pin which is deflectable from a bedding into which it is pushed by means of a thrustor,
the thrustor (10,20 30) being a coil spring (101, 201, 301), both ends of which are guided radially and axially via one spring seat respectively (102, 103; 202, 203; 302, 303),
both spring seats (102, 103; 202, 203; 302, 303) being guided along the spring axis parallel to one another by means of a linear guide (109, 110; 209, 210; 308),
one spring seat (103, 203, 303) being supported on the feeler head housing (4) so as to be able to tilt,
characterised in that
the further spring seat (102,202,302) is supported in a tiltable manner on the tracer pin (2) or the tracer pin holder (11).

2. Multicoordinate feeler head according to claim 1,
characterised in that
each spring seat (102, 103) has a fit (104, 105) for one end of the coil spring (101).

3. Multicoordinate feeler head according to claim 1 or 2,
characterised in that
the linear guide consists of at least one rod (109) and at least one boring (110) in which the rod (109) is guided radially parallel to the spring axis without play.

4. Multicoordinate feeler head according to claim 3,
characterised in that
at least one ofthe borings (110) is inserted in one of the spring seats (102) and at least one of the rods (109) is attached to the other spring seat (103) or operates together with the spring seat (103) radially and without play and is supported axially thereon.

5. Multicoordinate feeler head according to claim 4,
characterised in that
in one spring seat (102) a boring extending centrally to the spring axis is provided and on the other seat (103) a rod (109) extending centrally to the spring axis is provided.

6. Multicoordinate feeler head according to claim 1 or 2,
characterised in that
the spring seats (202, 203) have guiding surfaces (209, 210) which extend parallel to the spring axis and onto which both spring seats (202, 203) are guided longitudinally to one another.

7. Multicoordinate feeler head according to claim 1 or 2,
characterised in that
both spring seats (302, 303) are connected together via a scissor-type linkage (308) and are guided longitudinally parallel to one another.

8. Multicoodinate feeler head according to one of the previous claims,
characterised in that
the bedding (13, 14) of the tracer pin (2) is a multiposition bedding, each bedding point having a swivelling axis for the tracer pin (2) and the swivelling axes of the bedding points (13, 14) being situated in a plane (E) and the fulcrum (D) of the tiltable bedding of the spring seat (102, 202, 203) on the tracer pin (2) or tracer pin holder (11) being situated in the centre of this plane (E) in non-deflected state.

## Revendications

1. Tête de palpage multi-axes comprenant une touche de palpage susceptible d'être déviée par rapport à un système d'appui dans lequel il est sollicité à l'aide d'un dispositif de poussée, tête dans laquelle
- le dispositif de poussée (10, 20, 30) est un ressort en hélice (101, 201, 301) dont les deux extrémités sont guidées de façon forcée radialement et axialement en passant respectivement par un siège de ressort (102, 103 ; 202, 203 ; 302, 303),
- les deux sièges de ressort (102, 103 ; 202, 203 ; 302, 303) sont guidés à l'aide d'un guide linéaire (109, 110 ; 209, 210 ; 308) parallèlement l'un à l'autre le long de l'axe du ressort,
- un siège de ressort (103, 203, 303) s'appuie avec possibilité de basculement sur le boîtier de tête de palpage (4),
caractérisée par le fait que
- l'autre siège de ressort (102, 202, 302) porte avec possibilité de basculement contre la touche de palpage (2) ou le support de touche de palpage (11).

2. Tête de palpage multi-axes suivant la revendication 1, caractérisée par le fait que chaque siège de ressort (102, 103) présente un ajustement (104, 105) pour une extrémité du ressort en hélice (101).

3. Tête de palpage multi-axes suivant la revendication 1 ou 2, caractérisée par le fait que le guide linéaire comprend au moins une tige (109) et au moins un alésage (110) dans lequel la tige (109) est guidée parallèlement à l'axe du ressort sans jeu radial.

4. Tête de palpage multi-axes suivant la revendication 3, caractérisée par le fait que l'alésage (110) est ménagé dans l'un des sièges de ressort (102) et que la tige (109) est disposée sur l'autre siège de ressort (103), ou coopère sans jeu radial avec le siège de ressort (103) et porte axialement sur ce dernier.

5. Tête de palpage multi-axes suivant la revendication 4, caractérisée par le fait qu'un alésage (110) s'étendant de façon concentrique à l'axe de ressort est prévu dans un siège de ressort (102) et qu'une tige (109) s'étendant de façon concentrique à l'axe de ressort est prévue sur l'autre siège de ressort (103).

6. Tête de palpage multi-axes suivant la revendication 1 ou 2, caractérisée par le fait que les sièges de ressort (202, 203) présentent des surfaces de guidage (209, 210) qui s'étendent parallèlement à l'axe du ressort et sur lesquelles les deux sièges de ressort (202, 203) sont guidés longitudinalement l'un par rapport à l'autre.

7. Tête de palpage multi-axes suivant la revendication 1 ou 2, caractérisée par le fait que les deux sièges de ressort (302, 303) sont reliés entre eux et sont guidés longitudinalement parallèlement l'un par rapport à l'autre en passant par une transmission à parallèlogramme articulé (308).

8. Tête de palpage multi-axes suivant l'une des revendications précédentes, caractérisée par le fait que le système d'appui (13, 14) de la touche de palpage (2) est un système d'appui multipoints, chaque point d'appui présentant un axe de pivotement pour la touche de palpage (2), les axes de pivotement des points d'appui (13, 14) étant situés dans un plan (E) et le point (D) autour duquel le siège de ressort (102, 202, 302) peut basculer par rapport à la touche de palpage (2) ou au support de touche de palpage (11) étant, à l'état non dévié, situé au centre dudit plan (E).
